# EUROPEAN PATENT APPLICATION

(11) **EP 2 764 843 A1**
(43) Date of publication of application: **13.08.2014**
(21) Application number: 13154629.3
(22) Date of filing: 08.02.2013
(51) Int. Cl.: A61C 8/00, A61C 13/00

(54) **A hybrid abutment system**

(30) Priority: 08.02.2013 TR 201301558
(71) Applicant: Serce, Ibrahim, Izmir (TR)
(72) Inventor: Serce, Ibrahim, Izmir (TR)
(74) Representative: Cayli, Hülya

(57) **Abstract**

The hybrid abutment system of the present invention comprises at least one unprocessed abutment, on one side of which a prosthetic tooth is mounted after the abutment is processed and which comprises at least one body suitable to be processed and accordingly given a custom-made form; at least one connection element providing connection of unprocessed abutment, after processing, to at least one implant positioned in the gingiva and/or jaw bone and made of a long-lasting material; at least one connection zone disposed within the unprocessed abutment, providing connection of said connection element to the abutment and having a form corresponding to the portion, which is connected to the abutment, of the connection element; at least one fixing element suitable for fixing the abutment and connection element to an implant disposed in the gingiva, provided with at least one threaded portion and made of a long-lasting material.

## Description

### Field of Invention

The present invention relates to a hybrid abutment system which is suitable to be used in dental applications.

### Prior Art

Nowadays, in dental applications, especially in implant applications, there are various applications for connection of a dental prosthesis to gingiva. The most common of these applications is affixing an implant into jaw bone functioning as a tooth root, then assembling a retaining element called as abutment to this implant in such a manner that the retaining element stays above the gingiva and mounting dental prosthesis onto this abutment. Especially in custom-made abutment productions, abutment must be shaped in accordance with both the form of tooth and the form of mouth of the person undergoing implantation. For this reason, abutments made of a material that is easy-to-shape are preferred due to the ease of production. However, in the applications of this type, abutment can be damaged easily during treatment and usage (there may be breaking/loosening especially in the portion where the abutment is connected to the implant and in this case prosthetic tooth may move in the mouth). In order to prevent this undesired situation, strengthening of the abutment portion where it is connected to the implant is required. However, this strengthening process may create problems as abutment is being shaped and increase the production cost, as well.

In the patent application US2005084821A1 of the state of the art, an abutment system developed for the solution of the stated problems is disclosed. Disclosed system comprises an abutment, which is able to be shaped in accordance with the form of the jaw and tooth of the person and provided with a base portion; and a shoulder, which is disposed about the base portion of this abutment and which is able to be shaped in accordance with the form of the jaw and tooth of the person and made of a hybrid material. This shoulder can be a piece formed on the base of the abutment or assembled inside the base portion being produced externally, as well. During treatment, the abutment is fixed to an implant affixed to the jaw bone by means of this shoulder and prosthetic tooth is mounted onto the other side of the abutment. However, in this embodiment, since the abutment is mounted to the shoulder and implant is fitted inside this part, a firm connection cannot be obtained and there may be various problems especially during the use.

### Brief Description of the Invention

Hybrid abutment system of the present invention comprises at least one unprocessed abutment, on one side of which a prosthetic tooth is mounted after the abutment is processed and which comprises at least one body processed and accordingly given a custom-made form; at least one connection element providing connection of unprocessed abutment, after processing, to at least one implant positioned in the gingiva and/or jaw bone and made of a long-lasting material; at least one connection zone disposed within the unprocessed abutment, providing connection of said connection element to the abutment and having a structure corresponding to the portion, which is connected to the abutment, of the connection element; at least one fixing element fixing the abutment and connection element to the gingiva or to an implant disposed in the gingiva, provided with at least one threaded portion and made of a long-lasting material.

By means of the hybrid abutment system of the present invention, it is provided that unprocessed abutment remains stable during the processing and processed abutment is able to be fixed to the gingiva firmly and without any damage. Moreover, thanks to the fact that the unprocessed abutment is able to be processed easily, a custom-made hybrid abutment system is able to be obtained cheaply and easily. Thanks to the fact that the connection element connecting the abutment to the gingiva (or to the implant) is made of a long-lasting material, a hybrid abutment system with high quality is able to be obtained.

### Objective of the Invention

Objective of the present invention is to develop a custom-made hybrid abutment system.

Another objective of the present invention is to develop a hybrid abutment system with higher stability during the custom-made shaping phase.

A further objective of the present invention is to develop a hybrid abutment system, of which connection portion to the gingiva is strengthen and firmed.

Another objective of the present invention is to develop a hybrid abutment system which is able to be used in all abutment production systems and fixing applications.

A further objective of the present invention is to produce a hybrid system with low production costs and higher quality.

### Description of the Drawings

Illustrative embodiments of the hybrid abutment system developed according to the present invention and exemplary production systems using this system are illustrated in the accompanying figures briefly described hereunder.
Figure 1 is an exploded perspective view of the developed hybrid abutment system.
Figure 2 is an assembled side view of the developed hybrid abutment system.
Figure 3 is a perspective view of the abutment within the developed system.
Figure 4 is a side, cross sectional perspective view of the abutment within the developed system.
Figure 5 is a perspective view of another abutment within the developed system.
Figure 6 is a perspective view of the connection element within the developed system.
Figure 7 is a side view of the connection element within the developed system.
Figure 8 is a side view of the fixing element within the developed system.
Figure 9 is a side, cross sectional assembled view of the developed system.
Figure 10-14 are the perspective views of use of the abutment within the developed system in the exemplary production systems.

The parts in said figures are individually referenced as following.

| | |
|---|---|
| Hybrid abutment system | (S) |
| Retaining element | (T) |
| Unprocessed abutment | (A) |
| Body | (A1, 2c) |
| Cavity | (A2) |
| Retaining portion | (A3) |
| Flat surface | (A4) |
| Inclined surface | (A5) |
| Connection section | (A6) |
| Engagement member | (A7) |
| Connection zone | (B) |
| Connection element | (1) |
| Connection rod | (1a) |
| Retaining part | (1b) |
| Retaining surface | (1c) |
| First connection portion | (1d) |
| Second connection portion | (1e) |
| Connection part | (1f) |
| Fixing element | (2) |
| Rod | (2a) |
| Threaded portion | (2b) |
| Head portion | (2d) |

### Disclosure of the Invention

In dental applications, especially in implant applications, pieces in various forms and shapes (varying according to the form of the tooth and jaw of the patient, e.g. in the cylindrical, polygonal forms) called as abutment are used so that the prosthetic tooth is fastened onto the gingiva. In the custom-made abutment systems, the abutment is made of brittle material (such as zirconium) so that it can be shaped easily in terms of adaptability to the form of prosthetic tooth. However, in this case, there may arise various problems as the processed abutment acquired is being connected to the prosthetic tooth and the gingiva (e.g. acquired abutment may be broken or damaged during the connection). For this reason, a hybrid abutment system, which is appropriate to be used in dental applications and where the damage on the abutment at the production phase and connection phase is prevented, is provided by the present invention.

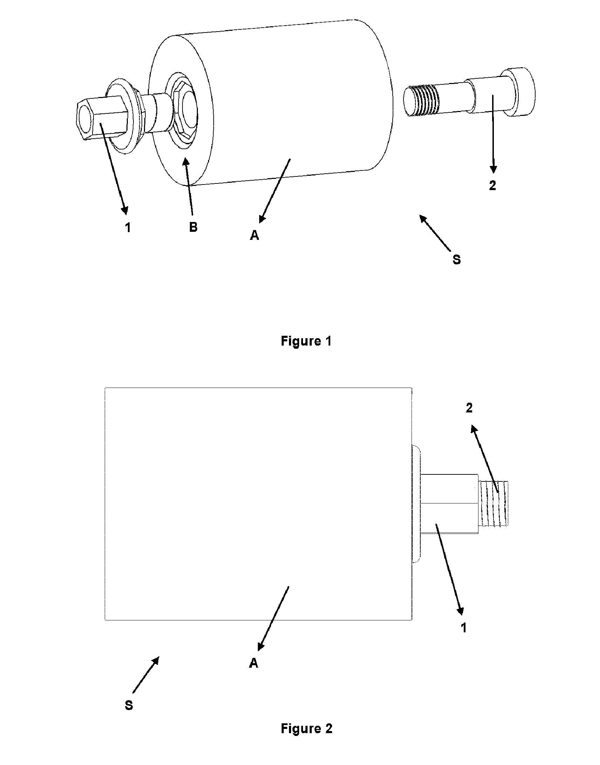

As shown in Figure 1-2, hybrid abutment system (S) of the present invention comprises at least one unprocessed abutment (A) which is preferably made of an easy processable material (e.g. zirconium, ceramic materials etc.) and on one side of which a prosthetic tooth is mounted after the abutment is processed and which comprises at least one body (A1) processed and accordingly given a custom-made form; at least one connection element (1) fitting to at least one connection zone (B) disposed within the unprocessed abutment by being mounted from one side of the unprocessed abutment (A) to this abutment (S) (this connection zone (B) is formed before the process of shaping unprocessed abutment as custom-made), providing the connection of the abutment (A) to at least one implant positioned in the gingiva and/or jaw bone and preferably made of a tissue-friendly, long-wearing material (e.g. materials such as titanium or gold etc.); at least one fixing element (2) fixing the abutment (A) and connection element (1) to the gingiva or to an implant disposed in the gingiva not shown in the figures), provided with at least one threaded portion (2b) and preferably made of a tissue-friendly, long-lasting material (e.g. materials such as titanium or gold etc.); and said connection zone (B) has a structure corresponding to the portion, which fits to the connection zone (B), of the connection element (1). Unprocessed abutment (A) and connection element (1) are connected to each other preferably by an adhesive element (this connection process can be carried out after the unprocessed abutment (A) is processed). With the developed system, connection of the unprocessed abutment (A), after processing, to the gingiva or to the implant is performed by an external part (connection part (1) and fixing element (2)) made of a long-lasting material and hence, producing the unprocessed abutment (A) from a single material is able to be obtained. Thus, the abutments processed in custom-made form and shaped in different ways are able to be obtained easily in a stable manner and since they are not connected to the gingiva and/or to the implant directly, damage during the application phase is also able to be prevented by reducing the force to be applied.

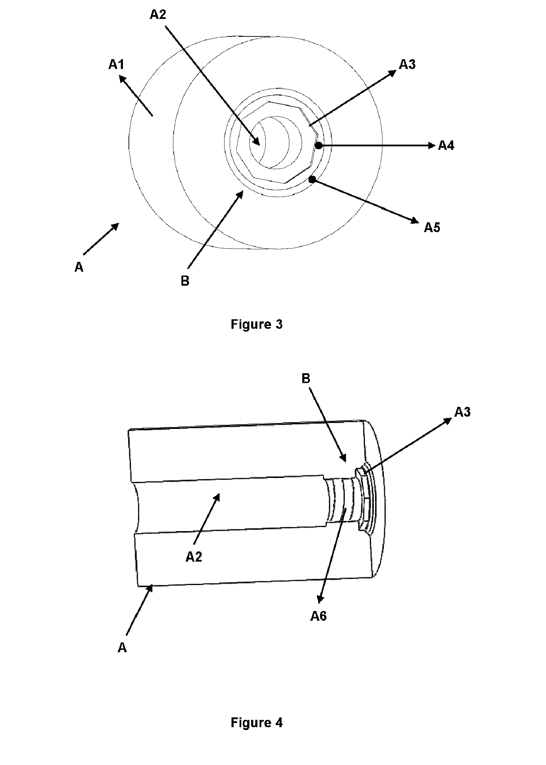

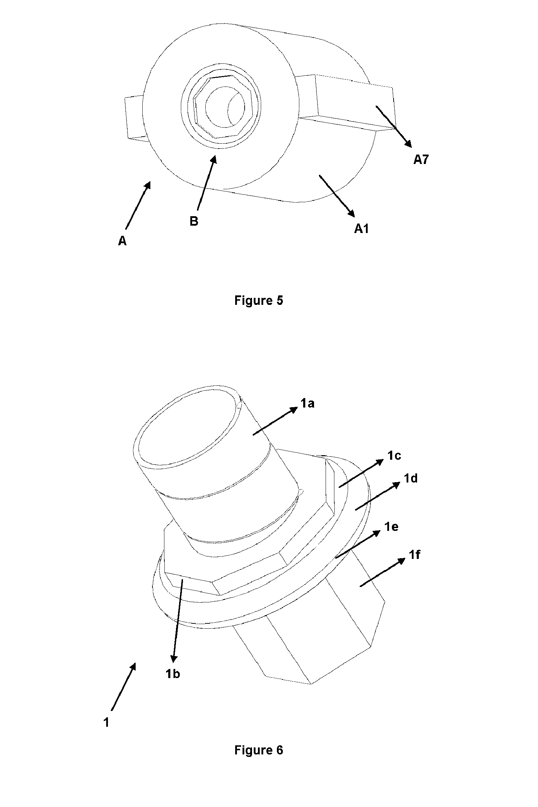

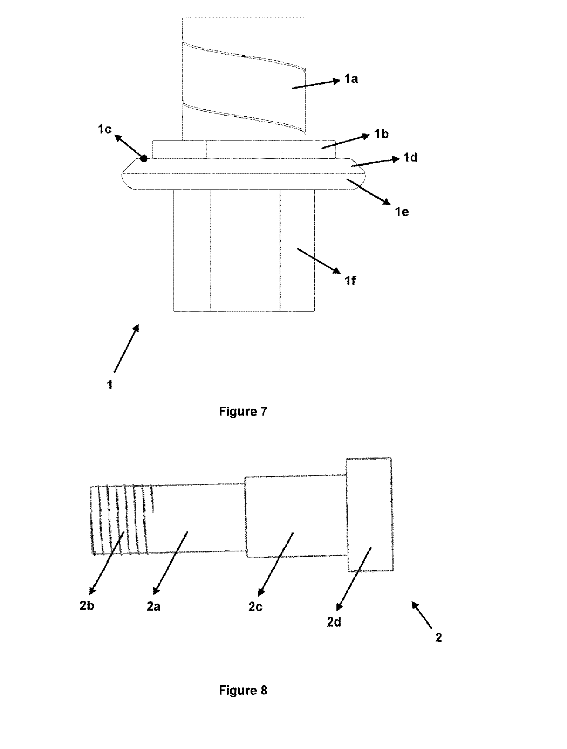

In a preferred embodiment of the present invention, as illustrated in Figure 3-5, the unprocessed abutment (A) of the developed system (S) comprises at least one cavity (A2) extending along the body (A1) in said body (A1) and preferably having circular section; at least one connection section (A6) positioned at one end of said cavity (A2) in the body (A1), having preferably a narrower cross sectional area than said cavity (A2) and preferably having a recessed form. Connection element (1) of the system (S) developed in this embodiment, as illustrated in figure 6 and figure 7, comprises a hollow connection rod (1a) positioned at one side of the connection element (1) and having preferably a threaded exterior surface; and at least one connection part (1f) preferably in polygonal form, positioned at the other side of the connection element (1), extending away from here, providing connection to the gingiva and having a hollow form and certain height. In order for the connection of the connection element (1) to the unprocessed abutment (A), this connection rod (1a) is fixed to said connection section (A6) by an adhesive element. Thus, damage on the abutment (A) is able to be prevented by reducing the force to be applied to the unprocessed abutment (A). Said connection section (A6) has a structure corresponding to the exterior surface of the connection rod (1a) and by preventing the gap between the connection rod (1a) and connection section (A6), a more stable system (S) is able to be obtained. Moreover, thanks to the threaded, recessed form, problems such as stretch and shift during the usage are able to be avoided by providing a more strong connection between the abutment (A) and the connection element (1) by the adhesive element. Thus, the developed system (S) is able to be used in dental bridge applications safely, as well. After the unprocessed abutment (A) is processed as custom made, its connection to the gingiva is performed by said connection part (1f) and by preventing the direct connection of the processed abutment to the gingiva (or to an implant fitted in the gingiva), stability and endurance of the abutment is increased.

In another exemplary embodiment of the present invention, connection element (1) further comprises at least one retaining part (1b) in a hollow form so as to surround the connection rod (1a), which extends outwardly from one end of the connection rod (1a), has preferably a polygonal form and a certain height and has a wider cross sectional area than the cross sectional area of the connection rod (1a); and at least one retaining surface (1c) with a flat form extending outwardly from the side of the retaining element (1 b), to which the connection rod (1a) is not connected, said retaining surface (1c) being at the same level with said side of the retaining part (1b) and surrounding the retaining element (1b). In this embodiment, the unprocessed abutment (A) comprises at least one retaining portion (A3) with a hollow form, which is positioned preferably in the body (A1) at the side, to which said cavity (A2) is not connected, of the connection section (A6) and to which retaining part (1 b) disposed within the connection element (1) fits so as to correspond; at least one flat surface (A4) which is positioned at the same level with the retaining portion (A3) so as to surround the retaining portion (A3) at the external edge of the retaining portion (A3) and to which the retaining surface (1c) fits so as to correspond. With this embodiment, connection element (1) is connected to the unprocessed abutment (A) (or to the abutment processed) more firmly and accordingly moving of the connection element (1) during usage is able to be prevented.

In another alternative embodiment of the present invention shown in the figures, connection element (1) comprises at least one first connection portion (1 d) extending outwardly from the external edge of said retaining surface (1c) in an inclined manner, surrounding the retaining surface (1c) and having a hollow form and a certain height. In this embodiment, the unprocessed abutment (A) comprises at least one inclined surface (A5) preferably extending from the external edge of the flat surface (A4) so as to widen outwardly and having a form so that first connection portion (1d) disposed within the connection element (1) corresponds to. With this embodiment, connection of the connection element (1), which is fitted to the processed abutment, to the abutment (unprocessed abutment (A) or processed abutment) in a more enduring and lasting manner is able to be obtained.

In another exemplary embodiment of the present invention, connection element (1) comprises at least one second connection portion (1e) extending from the external edge of the first connection portion (1d) in an inclined manner inwards (preferably in a curved form) and having a hollow form and a certain height; said connection part (1f) extends preferably away from the inner edge of the second connection portion (1e). Thus, when connection part (1f) is fitted to the gingiva (or to the implant), second connection portion (1e) forms a support surface; and as hybrid abutment system (S) is being assembled to the gingiva, user suffers less and gets less harm.

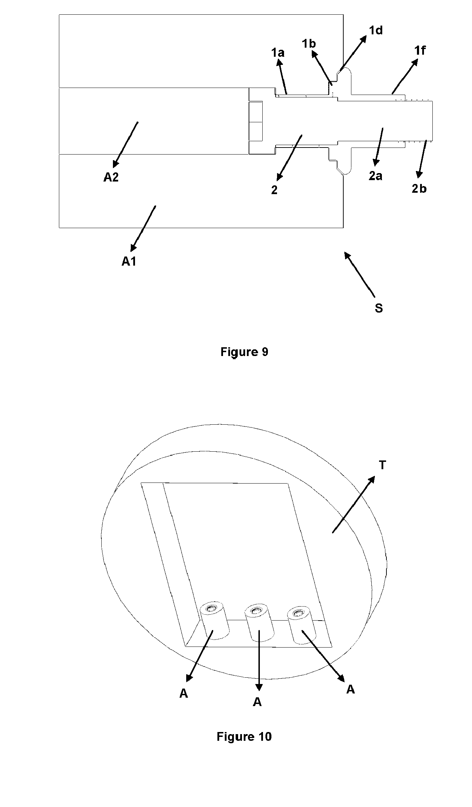

In the hybrid abutment system (S) of the present invention, as shown in figure 9, connection element (1) and connection rod (1 a) disposed within the connection element (1) are mounted to the connection zone (B) disposed within the abutment (A) passing through the portion of the abutment (A), where the connection section (A6) is provided, so as to fit to the connection section (A6). Thus, connection part (1f) disposed within the connection element (1) stays out of the abutment (A) and processed abutment is connected to the gingiva (or to the implant) by this connection part (1f). Thanks to the fixing element (2) of the processed abutment which is fitted into the body (A1) through the cavity (A2) portion and a threaded portion (2b) of which protrudes from the connection part (1f) by passing through the connection element (1), abutment and connection element (1) are fixed to the gingiva (or to the implant) . Thanks to the fact that the unprocessed abutment (A) is made of an easy processable material, it is able to be processed as custom-made in dental prosthesis laboratories, clinics or background centers. Thanks to the fact that the processed abutment is connected to the gingiva (or to the implant) by a connection element (1), both the stability of the unprocessed abutment (A) being made of a single material is increased during the process and a hybrid abutment system (S) with low production costs and high quality is able to be obtained by preventing the damage on the processed abutment during the connection.

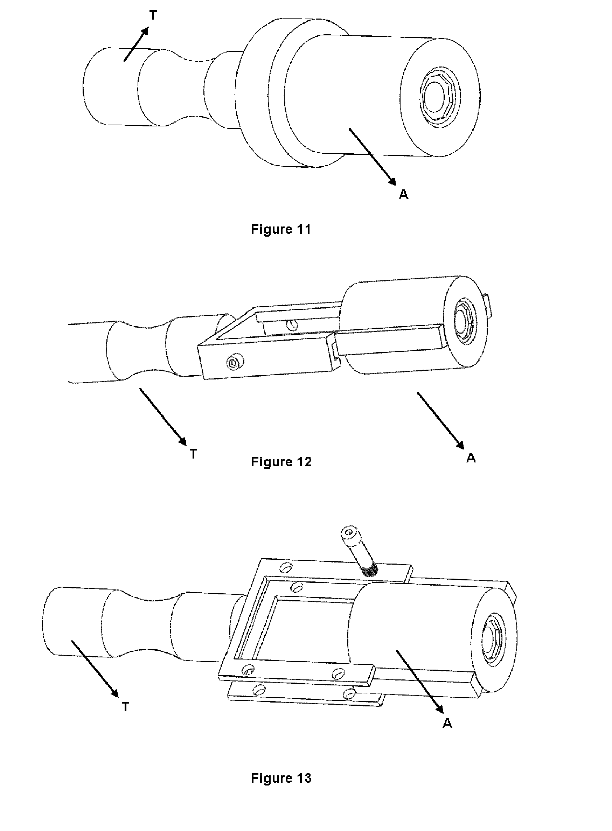

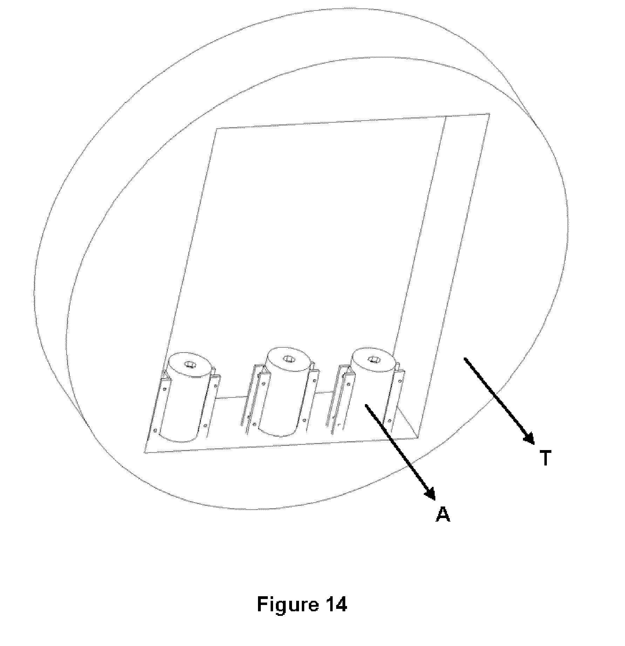

Fixing element (2), which is developed in a preferred embodiment of the present invention shown in figure 8, comprises at least one body (2c); at least one rod (2a) which is connected with one side of the body (2c), comprises said threaded portion (2b) and has a smaller cross sectional area than the cross sectional area of the body (2c); and at least one head portion (2d) which is positioned at the other side of the body (2c), has a wider cross sectional area than the cross sectional area of the body (2c) and has a form so as to correspond to cavity (A2) in the unprocessed abutment (A). Said fixing element (2) fits into the cavity (A2) in the abutment from the threaded portion (2b) and when fixing element (2) fits inside the abutment, its head portion (2d) stays in the cavity (A2), its body (2c) stays in the connection rod (1a) (and retaining part (1b)) within the connection element (1) and its rod (2b) stays in the connection part (1f). One part of the threaded portion (2b) preferably stays inside the connection part (1f) (in this case threaded portion (2b) of the connection part (1f) has a recessed form so that said threaded portion (2b) fits), another part is fixed to the gingiva (or to the implant) by extending from the connection part (1f). At least two sections, cross sectional areas of which are different from each other, are provided inside the connection element (1) in compliance with the form of said fixing element (2) and said body (2c) fits to one of these sections and said rod (2a) fits to another section. Cross sectional area of the section, where the body (2c) is fitted, is wider than the cross sectional area where the rod (2a) is fitted. In another exemplary embodiment of the present invention illustrated in figure 5, unprocessed abutment (A) of the developed system (S) comprises at least one engagement member (A7) positioned on the lateral surface of it. Thus, the developed system (S) is able to be used in any production system comprising at least one retaining element (T) for the process of processing and accordingly shaping the unprocessed abutment (A). In other words, unprocessed abutment (A) of the hybrid abutment system (S) is able to be used safely in the production system illustrated in figure 10, 11 and 14, where the unprocessed abutment (A) is fixed to the retaining element (T) by means of an adhesive; or in the production system illustrated in figure 12 and 13, where the unprocessed abutment (A) is fixed by using an external fixer, by fitting in the retaining element (T) by means of the engagement member (A7) (e.g. in Cerec-type, CNC processing units); and thus, a custom-made hybrid abutment system (S) is able to be obtained easily and cheaply.

Thanks to the hybrid abutment system (S) developed according to the present invention, both stability of the unprocessed abutment (A) during the processing and fixation of the processed abutment to the gingiva safely without any damage is able to be obtained. Moreover, thanks to the easy process of the unprocessed abutment (A), a custom-made hybrid abutment system (S) is able to be obtained with low production costs and higher quality. Thanks to the fact that the connection part (1) connecting the abutment to the gingiva (or to the implant) is made of a lasting material, a hybrid abutment system (S) with high quality is able to be obtained.

## Claims

1. A hybrid abutment system (S) which comprises at least one unprocessed abutment (A), on one side of which a prosthetic tooth is mounted after the abutment is processed and which comprises at least one body (A1) processed and accordingly given a custom-made form, **characterized by** comprising
- at least one connection element (1) providing connection of unprocessed abutment (A), after processing, to at least one implant positioned in the gingiva and/or jaw bone and made of a long-lasting material;
- at least one connection zone (B) disposed within the unprocessed abutment (A), providing connection of said connection element (1) to the abutment and having a structure corresponding to the portion, which is connected to the abutment, of the connection element (1);
- at least one fixing element (2) fixing the abutment (A) and connection element (1) to the gingiva or to an implant disposed in the gingiva, provided with at least one threaded portion (2b) and made of a long-lasting material.

2. A hybrid abutment system (S) according to claim 1, **characterized by** comprising at least one adhesive element which connects the abutment (A) and connection element (1) each other.

3. A hybrid abutment system (S) according to claim 1, **characterized in that** said abutment (A) comprises at least one cavity (A2) in said body (A1) extending along the body (A1); at least one connection section (A6) positioned at the one end of said cavity (A2) in the body (A1).

4. A hybrid abutment system (S) according to claim 3, **characterized in that** said connection section (A6) has a recessed form.

5. A hybrid abutment system (S) according to claim 3, **characterized in that** connection element (1) of the system (S) comprises a hollow connection rod (1a) positioned at one side of this element (1), fitted to said cavity (A2) and fixed here by means of an adhesive element; and at least one connection part (1f) positioned at the other side of the connection element (1), extending away from here, providing connection to the gingiva and having a hollow form and certain height.

6. A hybrid abutment system (S) according to claim 5, **characterized in that** exterior surface of the connection rod (1a) has a threaded form.

7. A hybrid abutment system (S) according to claim 5, **characterized in that** connection section (A6) has a structure corresponding to the exterior surface of the connection rod (1a) so as to prevent the gap between the connection rod (1a) and connection section (A6).

8. A hybrid abutment system (S) according to claim 5, **characterized in that** connection element (1) comprises at least one retaining part (1b), in a hollow form so as to surround the connection rod (1a), which extends outwardly from one end of the connection rod (1a), has a narrower cross sectional area than the cross sectional area of the connection rod (1a) and has a certain height; and at least one retaining surface (1 c) with a flat form extending outwardly from the side of the retaining element (1 b), to which the connection rod (1a) is not connected, being at the same level with said side of the retaining part (1 b) and surrounding the retaining element (1b).

9. A hybrid abutment system (S) according to claim 8, **characterized in that** said retaining part (1 b) has a polygonal form.

10. A hybrid abutment system (S) according to claim 8, **characterized in that** the unprocessed abutment (A) of the system comprises at least one retaining portion (A3) with a hollow form which is positioned in the body (A1) at the side of the connection section (A6), to which said cavity (A2) is not connected, and where the retaining part (1 b) disposed within the connection element (1) fits so as to correspond; at least one flat surface (A4) which is positioned at the same level with the retaining portion (A3) so as to surround the retaining portion (A3) at the external edge of the retaining portion (A3) and to which the retaining surface (1c) fits so as to correspond.

11. A hybrid abutment system (S) according to claim 8, **characterized in that** connection element (1) comprises at least one first connection portion (1 d) extending outwardly from the external edge of said retaining surface (1c) in an inclined manner, surrounding the retaining surface (1c) and having a hollow form and a certain height.

12. A hybrid abutment system (S) according to claim 11, **characterized in that** connection element (1) comprises at least one second connection portion (1e) extending from the external edge of the first connection portion (1 d) in an inclined manner inwards and having a hollow form and a certain height.

13. A hybrid abutment system (S) according to claim 1, **characterized in that** fixing element (2) comprises at least one body (2c); at least one rod (2a) which is connected with one side of the body (2c), comprises said threaded portion (2b) and has a smaller cross sectional area than the cross sectional area of the body (2c); and at least one head portion (2d) which is positioned at the other side of the body (2c), has a wider cross sectional area than the cross sectional area of the body (2c).

14. A hybrid abutment system (S) according to claim 13, **characterized by** comprising at least two sections inside the connection element (1), cross sectional areas of which are different from each other and to one of which said body (2c) fits, to another of which said rod (2a) fits; cross sectional area of the section, where the body (2c) is fitted, being wider than the cross sectional area where the rod (2a) is fitted.

15. A hybrid abutment system (S) according to one of the any claims above, **characterized in that** the unprocessed abutment (A) comprises at least one engagement member (A7) positioned on the lateral surface of it.
